# EUROPÄISCHE PATENTSCHRIFT

(11) **EP 0 782 599 B1**
(45) Veröffentlichungstag und Bekanntmachung des Hinweises auf die Patenterteilung: **24.06.1998**
(21) Anmeldenummer: 95932010.2
(22) Anmeldetag: 08.09.1995
(51) Int. Cl.: C08K 13/04

(54) **FLAMMFESTE, GLASFASERVERSTÄRKTE POLYAMIDHARZMASSE MIT MELAMIN- ODER MELEM-PHOSPHORSÄURE-UMSETZUNGSPRODUKTEN ALS FLAMMHEMMER**
FLAMEPROOF, GLASS FIBRE-REINFORCED POLYAMIDE RESIN COMPOUND WITH MELAMINE OR MELEM PHOSPHORIC ACID REACTION PRODUCTS AS FLAME RETARDANTS
COMPOSITION DE RESINE DE POLYAMIDE IGNIFUGEE RENFORCEE FIBRES DE VERRE, COMPORTANT DES PRODUITS DE REACTION D'ACIDE PHOSPHORIQUE ET DE MELAMINE OU DE MELEM COMME AGENTS IGNIFUGEANTS

(30) Priorität: 21.09.1994 AT 1785/94
(43) Veröffentlichungstag der Anmeldung: 09.07.1997
(73) Patentinhaber: DSM Melapur B.V., 6160 MD Geleen (NL)
(72) Erfinder: HORACEK, Heinrich, A-4040 Linz (AT); RITZBERGER, Klaus, A-4072 Alkoven (AT); REICHENBERGER, Rudolf, A-4030 Linz (AT); PRINZ, Christian, A-4060 Leonding (AT)
(74) Vertreter: Kunz, Ekkehard, Dr.
(86) Internationale Anmeldenummer: EP9503529
(87) Internationale Veröffentlichungsnummer: WO9609344

(56) Entgegenhaltungen:
- DATABASE WPI Derwent Publications Ltd., London, GB; AN 78-42849A & JP,A,53 049 054 (ASAHI CHEMICAL IND KK) , 4.Mai 1978
- DATABASE WPI Derwent Publications Ltd., London, GB; AN 73-07617U & ZA,A,7 201 506 (AMERICAN CYANAMID CO) , 29.November 1972

## Beschreibung

Flammhemmer für glasfaserverstärkte Polyamidharzmassen sind bereits bekannt. So werden im industriellen Maßstab beispielsweise roter Phosphor oder halogenhaltige Flammhemmer zur Flammfestausrüstung von glasfaserverstärkten Polyamidharzmassen eingesetzt, (s. z.B. EP-A-0 592 942).

Diese Flammhemmer weisen jedoch entscheidende Nachteile auf, da beispielsweise die halogenhaltigen Flammhemmer im Brandfall, besonders bei längeren Bränden toxische und korrosive Verbindungen, wie Dioxine oder Halogenwasserstoffe, freisetzen und roter Phosphor bei der Verarbeitung Phosphin bildet und weiters zu Endprodukten mit einer starken roten bis dunkelbraunen Eigenfarbe führt.

Geeignete halogenfreie Flammhemmer für nicht glasfaserverstärkte Polyamidharzmassen, wie Melamincyanurat weisen wiederum den Nachteil auf, daß sie bei glasfaserverstärkten Polyamidharzmassen keine ausreichende Flammhemmung erzielen (s. EP-A-0 614 933). Es war somit erforderlich, Flammhemmer zu finden, die auch in glasfaserverstärkten Polyamidharzmassen eine ausreichende Flammhemmung bewirken und im Brandfall keine korrosiven und toxischen Verbindungen abgeben.

Die Verwendung von Melaminphosphat, sowie von kondensierten Melaminphosphaten, wie etwa Dimelaminpyrophosphat zur Flammhemmung von anderen Kunststoffen als Polyamiden ist bereits aus mehreren Literaturstellen bekannt. So ist beispielsweise in US 4 010 137 die Verwendung dieser Flammhemmer bei Polyolefinen und in US 3 915 777 die Verwendung für Beschichtungen beschrieben. Aus Chem. Abstr. Vol 89: 111478 ist weiters bekannt, daß Melaminphosphat, das durch Wasserabspaltung in Dimelaminpyrophosphat überführt werden kann, bei einem mit Kalziumsilikat gefüllten, jedoch nichtglasfaserverstärkten Polyamid als Flammhemmer eingesetzt werden kann. Die Verwendung von Melaminphosphat, sowie von kondensierten Melaminphosphaten, wie etwa Dimelaminpyrophosphat in unverstärkten Polyamiden führt aber, wie Vergleichsversuche zeigten, zu völlig unbefriedigenden Resultaten in Bezug auf die Flammwidrigkeit, da die gewünschte Brandklasse V-O nicht erreicht wurde. Obwohl Melamin- oder Melemphosphat, sowie kondensierte Melamin- oder Melemphosphate, wie z. B. Dimelaminpyrophosphat bei der Flammfestausrüsung von nicht glasfaserverstärkten Polyamidharzmassen keine befriedigenden Ergebnisse liefern, wurde nun unerwarteterweise gefunden, daß Polyamidharzmassen die diese Verbindungen in Kombination mit Glasfasern enthalten, eine sehr gute Flammwidrigkeit aufweisen.

Gegenstand der vorliegenden Erfindung ist demnach eine flammfeste, glasfaserverstärkte Polyamidharzmasse, die 10 bis 40 Gew.% an Melamin- oder Melem-Phosphorsäure-Umsetzungsprodukten oder Gemische davon als Flammhemmer und 10 bis 60 Gew.% an Glasfasern enthält.

Erfindungsgemäß flammfest ausgerüstete Polyamidharzmassen können sowohl Homo- als auch Copolyamidharzmassen sein.
Polyamide werden beispielsweise durch Polymerisation eines Lactams, einer Aminosäure oder durch Polykondensation eines Diamins und einer Dicarbonsäure erhalten. Beispiele für geeignete Polyamide sind etwa solche, die durch Polymerisation von ε-Caprolactam, Aminocapronsäure, 7-Aminoheptansäure, 11-Aminoundecansäure, 9-Aminononansäure und α-Pyrrolidon, α-Piperidon erhalten werden, oder Polymere, die durch Polykondensation eines Diamins, wie etwa Hexamethylendiamin, Nonamethylendiamin, Undecanmethylendiamin, Dodecanmethylendiamin und m-Xylylendiamin mit einer Dicarbonsäure wie Terephthalsäure, Isophthalsäure, Adipinsäure, Sebacinsäure, einer zweibasischen Dodecansäure und Glutarsäure oder durch Copolymerisation derselben, erhalten werden.
Dies sind beispielsweise Poly-ε-caprolactam (Nylon 6), Polyhexamethylenadipinsäureamid (Nylon 6/6), Polyhexamethylenazelainsäureamid (Nylon 6/9), Polyhexamethylensebacinsäureamid (Nylon 6/10), Polyhexamethylendodecandisäureamid (Nylon 6/12), Polypyrrolidon (Nylon 4), Polycapryllactam (Nylon 8), Poly(ω-aminoundecansäure) (Nylon 11), Poly(ω-dodecanlactam) (Nylon 12), und deren Copolyamide und Terpolyamide wie zum Beispiel Nylon 6/66, Nylon 6/12, Nylon 6/6T, wobei T Terephthalsäure bedeutet, Nylon 66/BAC 6, wobei BAC 1,3 - oder 1,4- bis-Aminocyclohexan bedeutet, Nylon 6/66/12 und Nylon 6/610/PACM10, wobei PACM 4,4'-Diaminodicyclohexylmethan bedeutet.

Bevorzugte Polyamide sind Nylon 6, Nylon 6/6, Nylon 6/10, Nylon 6/12, Nylon 11 und Nylon 12. Besonders bevorzugt sind Nylon 6 und Nylon 6/6.

Die Polyamidharzmasse kann dabei auch aus einem Gemisch von zwei oder mehreren Polyamiden bestehen. Weiters kann die Polyamidharzmasse zusätzliche Harze, wie etwa Polyester, Polyolefine, ABS, Acrylnitril-Styrol-Ethylen-Vinylacetat-Copolymere, EPDM-Kautschuk oder andere Kautschuke enthalten. Die flammfest auszurüstende Polyamidharzmasse weist einen Gehalt von 10 - 60 Gew.%, bevorzugt von 15 - 50 Gew.% an Glasfasern auf. Die Glasfasern können in Form von Kurzglasfasern, als Langglasfasern oder aber auch in Form von Glasfasermatten eingesetzt werden.
Die Fasermatten können dabei aus Schnittfasem mit 10 bis 250 mm Länge oder aus zu einem Vlies abgelegten Endlosfäden bestehen, wobei die Fasem und Fäden sowohl in Wirrlage als auch gerichtet vorliegen können.
Es ist jedoch auch möglich andere Faserarten, wie etwa Kohlenstoffasern oder Aramidfasern, zur Verstärkung der Polyamidharzmasse zu verwenden. Bevorzugt werden Glasfasern, besonders bevorzugt Kurzglasfasern verwendet. Die glasfaserverstärkte Polyamidharzmasse weist weiters 10 - 40 Gew.%, bevorzugt 15 - 35 Gew.%, an Melamin- oder Melem-Phosphorsäure-Umsetzungsprodukten oder Gemische davon als Flammhemmer auf.

Als Flammhemmer für glasfaserverstärkte Polyamidharzmassen eignen sich demnach Melamin- oder Melem-Phosphorsäure-Umsetzungsprodukte oder Gemische davon.
Unter Melamin- bzw. Melem-Phosphorsäure-Umsetzungsprodukte sind dabei Verbindungen zu verstehen, die durch Umsetzung von Melamin bzw. Melem mit Phosphorsäure erhalten werden, wobei das Verhältnis von Melamin bzw. Melem zu Phosphorsäure variiert.
Ausgehend von einem Melamin- bzw. Melem-Phosphorsäure-Verhältnis von 1 : 1, können somit durch Verwendung eines Melamin- bzw. Melem- oder eines Phosphorsäureüberschusses unterschiedliche Verbindungen erhalten werden. Beispiele dafür sind Melaminphosphat, Melemphosphat, Melempyrophosphat, Dimelaminpyrophosphat, Dimelaminphosphat oder Melaminpolyphosphate.
Die Melamin- bzw. Melem-Phosphorsäure-Umsetzungsprodukte können jedoch nicht nur als Einzelverbindung oder als Gemisch mehrerer Einzelverbindungen zur Flammfestausrüstung der glasfaserverstärkten Polyamid harzmassen eingesetzt werden, es kann auch ein Gemisch von einer oder mehreren durch die Umsetzung von Melamin bzw. Melem und Phosphorsäure erhaltenen Einzelverbindungen mit unumgesetztem Melamin bzw. Melem oder mit unumgesetzter Phosphorsäure verwendet werden.

Bevorzugt werden Melaminphosphat, Melaminpyrophosphate und Melaminpolyphosphate, sowie Gemische davon, besonders bevorzugt Dimelaminpyrophosphat-als Flammhemmer für glasfaserverstärkte Polyamidharzmassen verwendet.

Die oben angeführten Verbindungen sind bereits aus der Literatur bekannt, so kann etwa die Herstellung von Dimelaminpyrophosphat und Melaminphosphat beispielsweise analog EP 0 413 376 erfolgen.

Die erfindungsgemäße Polyamidharzmasse kann gegebenenfalls noch weitere Flammhemmer, bevorzugt halogenfreie Flammhemmer enthalten. Beispiele für geeignete Koflammhemmer sind Zinkborat, Zinkphosphat, Melaminsulfat oder Ammoniumpolyphosphat.
Der erfindungsgemäßen Polyamidharzmasse können außerdem übliche Additive wie Gleitmittel, Dispergiermittel und Haftvermittler zugesetzt werden. Bevorzugt enthalten die Polyamidharze zusätzlich Dispergiermittel, wie etwa Stearate, Phosphonate, Fettsäureamide oder Aerosile.

Die Herstellung der flammfesten, glasfaserverstärkten Polyamidharzmasse erfolgt durch die in der Kunststoffindustrie üblichen Verarbeitungstechniken, wie etwa Vermischen des auszurüstenden Polyamids mit den Glasfasern und dem Flammhemmer, sowie gegebenenfalls mit einem oder mehreren der oben erwähnten Koflammhemmern und Additiven, in den gewünschten Gewichtsverhältnissen, Aufschmelzen des Gemisches und anschließender Granulierung. Zur Durchführung des Verfahrens eignen sich in der Kunststoffindustrie übliche Vorrichtungen wie etwa Schneckenextruder, Strangpressen, Kneter, wie etwa Buss- oder Brabenderkneter, oder Spritzgußmaschinen.

Damit in der fertigen Polyamidharzmasse Dimelaminpyrophosphat als Flammhemmer enthalten ist, ist es möglich, direkt Dimelaminpyrophosphat zuzumischen.
Es ist jedoch auch möglich, Dimelaminpyrophosphat in situ aus Melaminphosphat herzustellen. Dazu werden in einen Zweischneckenextruder mit Dosierstellen für das Polyamid, die Glasfasern und den Flammhemmer der Reihe nach und im gewünschten Gewichtsverhältnis das auszurüstende Polyamid, Melaminphosphat und die Glasfasern zudosiert.
Kurz vor dem Ende des Zweischneckenextruders erfolgt eine Vakuumentgasung, wodurch Melaminphosphat zu Dimelaminpyrophosphat unter Wasserabspaltung kondensiert und das extrudierte Polyamid Dimelaminpyrophosphat enthält.
Bei der Vakuumentgasung müssen etwa 4,2 Gew.% an Wasser, bezogen auf Melaminphosphat, aus dem Melaminphosphat entfernt werden, wozu ein Vakuum von mindestens 250 mbar erforderlich ist. Zur Erzielung des benötigten Grob-Vakuums eignen sich am besten Flüssigkeitsring-, Hubkolben-, Membran- und Drehschieber-Vakuumpumpen. Die Temperatur bei der Vakuumentgasung liegt dabei bevorzugt 10 bis 30 °C über der Extrusionstemperatur des zu verarbeitenden Polyamides.

Die erfindungsgemäße Polyamidharzmasse weist die Brandklasse V-O nach UL (Underwriter Laboratories) 94 auf. Ein Vorteil ist ein stark intumeszierendes Verhalten der Polyamidharzmasse. Weiters sind die mechanischen Eigenschaften der mit den erfindungsgemäßen Flammhemmern flammfest ausgerüsteten Polyamide mit denen mit aus dem Stand der Technik bekannten Flammhemmern, beispielsweise mit halogenhaltigen oder mit rotem Phosphor, ausgerüsteten Polyamide vergleichbar bzw. teilweise sogar verbessert.

Die mit den erfindungsgemäßen Flammhemmern ausgerüsteten glasfaserverstärkten Polyamidharzmassen eignen sich deshalb beispielsweise zur Herstellung von Formkörpern, die in der Elektro- oder Elektronikindustrie eingesetzt werden.

In den nachfolgenden Beispielen wurden folgende Einsatzstoffe verwendet:

| | |
|---|---|
| Polyamid 6/6 | Durethane A 31 (Fa. Bayer) |
| Polyamid 6 | Ultramid B4 (Fa. BASF) |
| Kurzglasfasern mit 4,5 mm Länge | P 327 (Fa. Vetrotex) |
| Kurzglasfasern mit 4,5 mm Länge | CS 300 (Fa. Vitrofil) |
| Melaminphosphat | Fa. Chemie Linz |
| Dimelaminpyrophosphat | Fa. Chemie Linz |
| Comperlan | Fa. Henkel |
| (Fettsäurealkylolamid) | |

### Beispiele 1 - 15

Auf einem Zweischneckenextruder der Fa. Leistritz wurde durch Kaltabschlag ein Granulat aus Polyamid mit Glasfasern und Dimelaminpyrophosphat gewonnen. Der Zweischneckenextruder war mit 3 Dosierstellen für Kunststoffgranulat, für Flammhemmerpulver und für Glasfasern ausgerüstet. Die Extrusionstemperaturen betrugen 270 bis 300°C die Durchsätze lagen zwischen 1 bis 10 kg/h.
Die erhaltenen Granulate wiesen ein Schüttgewicht von mindestens 600 g/l auf und wurden anschließend auf einer Spritzgußmaschine der Fa. Arburg zu Testkörpern verspritzt, die hinsichtlich ihres Brandverhaltens nach UL94 und ihrer mechanischen Eigenschaften geprüft wurden. Alle Testkörper erreichten dabei die Brand klasse V-0 nach UL-94.

Weiters wurden verschiedene Vergleichsversuche durchgeführt:
V-1: Polyamid 6/6, das 25 Gew.% Kalziumsilikat (NYAD G20544, Fa. Nyco) anstelle von Glasfasern enthielt, wurde mit 25 Gew.% Dimelaminpyrophosphat als Flammhemmer versetzt.
V-2: Polyamid 6/6 mit 25 Gew.% an Glasfasern wurde mit 25 Gew.% Melamincyanurat als Flammhemmer versetzt.
V-3: Polyamid 6/6 mit 25 Gew.% an Glasfasern wurde mit 9 Gew.% an rotem Phosphor als Flammhemmer versetzt.
V-4: Polyamid 6/6 mit 25 Gew.% an Glasfasern wurde mit 18 Gew.% Dechlorane 602 (Fa. Occidental Chemical Corp.) und 6 Gew.% an Antimontrioxid (Blue Star, Fa. BBU) als Flammhemmer versetzt.
V-5: Polyamid 6/6 mit 0 Gew.% an Glasfasern wurde mit 10 Gew.% an Dimelaminpyrophosphat als Flammhemmer versetzt.

Die jeweilige Zusammensetzung der Polyamidharzmassen, sowie die Ergebnisse der durchgeführten Tests sind in Tabelle 1 und 2 zusammengefaßt.

Es werden folgende Abkürzungen verwendet.

| | |
|---|---|
| Polyamid | PA |
| Glasfasern Fa. Vitrofil | CS300 |
| Glasfasern Fa. Vetrotex | P327 |
| Flammhemmer | FH |
| Koflammhemmer | KFH |
| Dimelaminpyrophosphat | DMPP |
| Dispergierhilfe | DH |

**Tabelle 1**

| Glasfaserverstärkte Polyamide der Brandklasse V-0 nach UL-94 (1,6 mm Probekörper) mit 25 % Glasfasern (GF) und DMPP als Flammhemmer | | | | | |
|---|---|---|---|---|---|
| Bsp. | Polyamid | GF | FH | KFH | DH |
| 1 | PA 6/6 | CS300 | 30 % | - | - |
| 2 | PA 6 | CS300 | 30 % | - | - |
| 3 | PA 6/6 | CS300 | 30 % | - | 1% Zn-Stearat |
| 4 | PA 6/6 | CS300 | 25 % | 5 % Zn-borat | 0,5 % Zn-Stearat |
| 5 | PA 6/6 | P327 | 20 % | 5 % Zn-borat | - |
| 6 | PA 6 | P327 | 20 % | 5 % Zn-borat | - |
| 7 | PA 6 | P327 | 20 % | 5 % Zn-borat | 1 % Aerosil |
| 8 | PA 6/6 | P327 | 20 % | 5 % Zn-borat | 0,5 % Comperlan |
| 9 | PA 6 | P327 | 20 % | 5 % Zn-Phosphat | - |
| 10 | PA 6 | P327 | 20 % | 5 % Zn-Phosphat | 0,5 % Comperlan |
| 11 | PA 6/6 | P327 | 20 % | 5 % Zn-borat | 1 % Zn-Stearat |
| 12 | PA 6/6 | P327 | 20 % | 5 % Zn-borat | 0,5 % Comperlan |
| 13 | PA 6/6 | P327 | 30 % | - | 0,5 % Comperlan |
| 14 | PA 6/6 | P237 | 30 % | - | - |
| | | 15 % | | | |
| 15 | PA 6/6 | P237 | 15 % | - | 1 % Comperlan |
| | | 50 % | | | |

Die Polyamide gemäß Beispiel 1 - 13 enthielten jeweils 25 Gew.% an Glasfasern, in Beispiel 14 wurden 15 Gew.% und in Beispiel 15 wurden 50 Gew.% an Glasfasern verwendet. Alle Proben erzielten die Brandklasse V-0.

| Bsp. | Polyamid | GF | FH | UL 94 |
|---|---|---|---|---|
| V-1 | PA 6/6 | Ca-Silikat | 25 % | V-1 |
| | | 25 % | | |
| V-2 | PA 6/6 | P237 | 25 % | V-1 |
| | | 15 % | Melamin- | |
| | | | Cyanurat | |
| V-3 | PA 6/6 | P237 | 9 % roter | V-0 |
| | | 25 % | Phosphor | |
| V-4 | PA 6/6 | P237 | * | V-0 |
| | | 25 % | | |
| V-5 | PA 6/6 | 0 | 10 % DMPP | V-2 |

| | | | | |
|---|---|---|---|---|
| * 18 % Dechlorane 602 + 6 % Antimontrioxid | | | | |

**Tabelle 2**

| | | | | | | |
|---|---|---|---|---|---|---|
| Es wurden folgende mechanische Eigenschaften überprüft: Schlagzähigkeit (SZ) nach DIN 53453, Kerbschlagzähigkeit (KSZ), Zugfestigkeit (ZF) und Dehnung (D) nach DIN 53455, E-Modul nach DIN 53452/57 und Biegefestigkeit (BF) nach DIN 53452/57. | | | | | | |

| Bsp. | SZ [kJ/m²] | KSZ [kJ/m²] | D [%] | E-Modul [MPa] | BF [MPa] | ZF [MPa] |
|---|---|---|---|---|---|---|
| 1 | 30 | 6 | 3 | 8000 | 160 | 130 |
| 2 | 35 | 7 | 2,5 | 6500 | 150 | 110 |
| 3 | 40 | 7 | 3 | 8000 | 170 | 130 |
| 4 | 35 | 8 | 3 | 9000 | 165 | 135 |
| 5 | 30 | 8 | 3 | 8500 | 170 | 125 |
| 6 | 30 | 7 | 2,5 | 8000 | 160 | 120 |
| 7 | 35 | 7 | 2,5 | 7500 | 155 | 130 |
| 8 | 40 | 10 | 3 | 9000 | 165 | 130 |
| 9 | 45 | 9 | 2,5 | 7000 | 150 | 120 |
| 10 | 35 | 8 | 2,5 | 7000 | 160 | 120 |
| 11 | 40 | 6 | 3 | 8500 | 180 | 140 |
| 12 | 40 | 7 | 3 | 9000 | 190 | 130 |
| 13 | 35 | 9 | 3 | 9000 | 185 | 135 |
| 14 | 30 | 5 | 4 | 6500 | 150 | 100 |
| 15 | 55 | 10 | 2 | 16000 | 250 | 230 |
| V1 | 45 | 4 | 3 | 8000 | 150 | 80 |
| V2 | 4,5 | - | 3 | 5000 | 110 | 70 |
| V3 | 45 | 11 | 3 | 8500 | 120 | 70 |
| V4 | 32 | 5 | 2 | 8500 | 150 | 130 |

### Beispiel 16

Auf einem Zweischneckenextruder wurde Polyamid 6/6 der Fa. Bayer mit der Markenbezeichnung Durethane A31 in Granulatform in Schuß 1 zudosiert. In Schuß 4 wurde die Flammhemmerzugabe durchgeführt. Als Flammhemmer wurde Melaminphosphat der Fa. Chemie Linz GmbH verwendet. In Schuß 6 erfolgte die Glasfaserzugabe. Die Vakuumentgasung erfolgte in Schuß 8. Das Temperaturprofil wurde so gewählt, daß bei der Dosierung von Polyamid 270°C, bei der Vakuumabsaugung 280°C und an der Düse 260°C vorlagen. Der Durchsatz betrug 5 kg/h. Der extrudierte Strang wurde zwecks Kühlung durch ein Wasserbad geführt und in einem Kaltabschlag zu Zylindergranulat zerkleinert, das ein Schüttgewicht größer 600 g/l aufwies. Dieses Granulat wurde entweder zu Platten verpreßt oder in einer Spritzgußmaschine zu Platten verspritzt. Die so hergestellten Prüfkörper weisen die Brandklasse V-O nach UL94 und ausreichende mechanische Eigenschaften auf.

### Beispiel 17:

Polyamid 6/6 wurde auf einem Zweischneckenextruder mit 25 Gew.% an Glasfasern P237 und 20 Gew.% eines Melamin-Phosphorsäureumsetzungsproduktes mit einem Melamin/Phosphorsäure-Verhältnis von 2 : 1 analog Beispiel 1 - 15 zu Granulat verarbeitet, das zu Platten von 1,6 mm Dicke verspritzt wurde.
Der UL94 Brandtest ergab eine V - O Einstufung der Probenkörper.
Die Herstellung des Umsetzungsproduktes erfolgte durch Reaktion von Melamin und Phosphorsäure im entsprechenden Gewichtsverhältnis in Gegenwart von Wasser und anschließendem Eindampfen des Reaktionsgemisches.
Nach dem Eindampfen wurde das so erhaltene Umsetzungsprodukt 3 Stunden bei 250°C gelagert und in der beschriebenen Weise zur Flammfestausrüstung eingesetzt.

### Beispiel 18:

Analog Beispiel 17 wurde Polyamid 6/6 mit 25 Gew.% an Glasfasern P237 und 30 Gew.% eines Melamin-Phosphorsäureumsetzungsproduktes mit einem Melamin/Phosphorsäure-Verhältnis von 1 : 2 zu Granulat und anschließend zu Platten verarbeitet.
Es wurde wiederum die Brandklasse V - O nach UL94 erreicht.

## Patentansprüche

1. Flammfeste, glasfaserverstärkte Polyamidharzmasse, enthaltend 10 bis 40 Gew.% an Melamin- oder Melem-Phosphorsäure-Umsetzungsprodukten oder Gemische davon als Flammhemmer und 10 bis 60 Gew.% an Glasfasern.

2. Flammfeste, glasfaserverstärkte Polyamidharzmasse nach Anspruch 1, dadurch gekennzeichnet, daß sie Melaminphosphat, Melaminpyrophosphate oder Melaminpolyphosphate oder Gemische davon als Flammhemmer enthält.

3. Flammfeste, glasfaserverstärkte Polyamidharzmasse nach Anspruch 1, dadurch gekennzeichnet, daß sie Dimelaminpyrophosphat als Flammhemmer enthält.

4. Flammfeste, glasfaserverstärkte Polyamidharzmasse nach Anspruch 1, dadurch gekennzeichnet, daß sie 15 - 35 Gew.% an Flammhemmer enthält.

5. Flammfeste, glasfaserverstärkte Polyamidharzmasse nach Anspruch 1, dadurch gekennzeichnet, daß sie zusätzliche Koflammhemmer enthält.

6. Flammfeste, glasfaserverstärkte Polyamidharzmasse nach Anspruch 5, dadurch gekennzeichnet, daß als Koflammhemmer Zinkborat, Zinkphosphat, Melaminsulfat oder Ammoniumpolyphosphat verwendet werden.

7. Flammfeste, glasfaserverstärkte Polyamidharzmasse nach Anspruch 1, dadurch gekennzeichnet, daß sie zusätzliche übliche Additive enthält.

8. Flammfeste, glasfaserverstärkte Polyamidharzmasse nach Anspruch 7, dadurch gekennzeichnet, daß sie Stearate, Phosphonate, Fettsäureamide oder Aerosil als Dispergiermittel enthält.

9. Verfahren zur Herstellung einer flammfesten, glasfaserverstärkten Polyamidharzmasse nach Anspruch 1, dadurch gekennzeichnet, daß ein Polyamid mit Glasfasern und mit dem Flammhemmer, sowie gegebenenfalls mit zusätzlichen Koflammhemmern und Addtitiven, im gewünschten Gewichtsverhältnis vermischt wird, das Gemisch aufgeschmolzen und zu Granulat oder zu Formkörpern für die Elektro- oder Elektronikindustrie verarbeitet wird.

10. Verfahren zur Herstellung einer flammfesten, glasfaserverstärkten Polyamidharzmasse nach Anspruch 9, dadurch gekennzeichnet, daß in einem Zweischneckenextruder Polyamid mit Glasfasern und Melaminphosphat, sowie gegebenenfalls mit zusätzlichen Koflammhemmern und Additiven, vermischt und aufgeschmolzen wird, worauf die so erhaltene Polymerschmelze vor Austritt aus dem Zweischneckenextruder einer Vakuumentgasung unterzogen wird, sodaß Melaminphosphat unter Wasserabspaltung zu Dimelaminpyrophosphat kondensiert.

## Claims

1. Flame resistant, glass fibre-reinforced polyamide resin composition comprising 10 to 40 % by weight of melamine- or melem-phosphoric acid reaction products or mixtures thereof as flame retardants and 10 to 60 % by weight of glass fibres.

2. Flame resistant glass fibre-reinforced polyamide resin composition according to Claim 1, characterized in that it comprises melamine phosphate, melamine pyrophosphates or melamine polyphosphates or mixtures thereof as flame retardants.

3. Flame resistant glass fibre-reinforced polyamide resin composition according to Claim 1, characterized in that it comprises dimelamine pyrophosphate as a flame retardant.

4. Flame resistant glass fibre-reinforced polyamide resin composition according to Claim 1, characterized in that it comprises 15 - 35 % by weight of flame retardants.

5. Flame resistant glass fibre-reinforced polyamide resin composition according to Claim 1, characterized in that it comprises additional co-flame retardants.

6. Flame resistant glass fibre-reinforced polyamide resin composition according to Claim 5, characterized in that zinc borate, zinc phosphate, melamine sulphate or ammonium polyphosphate is used as a co-flame retardant.

7. Flame resistant glass fibre-reinforced polyamide resin composition according to Claim 1, characterized in that it comprises additional customary additives.

8. Flame resistant glass fibre-reinforced polyamide resin composition according to Claim 7, characterized in that it comprises stearates, phosphonates, fatty acid amides or Aerosil as dispersing agents.

9. Process for the preparation of a flame resistant glass fibre-reinforced polyamide resin composition according to Claim 1, characterized in that a polyamide is mixed with glass fibres and with the flame retardant, and if appropriate with additional co-flame retardants and additives, in the desired weight ratio, and the mixture is melted and processed to granules or to shaped articles for the electrical or electronics industry.

10. Process for the preparation of a flame resistant glass fibre-reinforced polyamide resin composition according to Claim 9, characterized in that polyamide is mixed and melted with glass fibres and melamine phosphate, and if appropriate with additional co-flame retardants and additives in a twin-screw extruder, after which the polymer melt thus obtained is subjected to vacuum degassing before discharge from the twin-screw extruder, so that melamine phosphate undergoes condensation to dimelamine pyrophosphates, water being split off.

## Revendications

1. Composition de résine de polyamide ignifugée renforcée par des fibres de verre, contenant de 10 à 40 % en poids de produits de réaction de mélamine ou de melem et d'acide phosphorique, ou de mélanges de ceux-ci, comme agent ignifugeant, et de 10 à 60 % en poids de fibres de verre.

2. Composition de résine de polyamide ignifugée renforcée par des fibres de verre selon la revendication 1, caractérisée en ce qu'elle contient du phosphate de mélamine, des pyrophosphates de mélamine ou des polyphosphates de mélamine, ou des mélanges de ceux-ci, comme agent ignifugeant.

3. Composition de résine de polyamide ignifugée renforcée par des fibres de verre selon la revendication 1, caractérisée en ce qu'elle contient du pyrophosphate de dimélamine comme agent ignifugeant.

4. Composition de résine de polyamide ignifugée renforcée par des fibres-de verre selon la revendication 1, caractérisée en ce qu'elle contient de 15 à 35 % en poids d'agent ignifugeant.

5. Composition de résine de polyamide ignifugée renforcée par des fibres de verre selon la revendication 1, caractérisée en ce qu'elle contient des co-agents ignifugeants supplémentaires.

6. Composition de résine de polyamide ignifugée renforcée par des fibres de verre selon la revendication 5, caractérisée en ce qu'on utilise, comme co-agents ignifugeants, du borate de zinc, du phosphate de zinc, du sulfate de mélamine ou du polyphosphate d'ammonium.

7. Composition de résine de polyamide ignifugée renforcée par des fibres de verre selon la revendication 1, caractérisée en ce qu'elle contient des additifs usuels supplémentaires.

8. Composition de résine de polyamide ignifugée renforcée par des fibres de verre selon la revendication 7, caractérisée en ce qu'elle contient des stéarates, des phosphonates, des amides d'acides gras ou de l'Aerosil comme agents dispersifs.

9. Procédé de préparation d'une composition de résine de polyamide ignifugée renforcée par des fibres de verre selon la revendication 1, caractérisé en ce qu'on mélange un polyamide avec des fibres de verre et avec l'agent ignifugeant, ainsi qu'éventuellement avec des co-agents ignifugeants et des additifs supplémentaires dans des proportions en poids souhaitées, on fait fondre le mélange et on le transforme en granules ou en corps moulés pour l'industrie électrique ou pour l'industrie électronique.

10. Procédé de préparation d'une composition de résine de polyamide ignifugée renforcée par des fibres de verre selon la revendication 9, caractérisé en ce qu'on mélange et on fait fondre un polyamide avec des fibres de verre et du phosphate de mélamine, et éventuellement avec des co-agents ignifugeants et des additifs supplémentaires, dans une extrudeuse à double vis, après quoi on soumet le polymère fondu ainsi obtenu à un dégazage sous vide avant qu'il sorte de l'extrudeuse à double vis, de sorte que le phosphate de mélamine est condensé en pyrophosphate de dimélamine avec élimination de l'eau.
